# EUROPEAN PATENT APPLICATION

(11) **EP 1 594 060 A1**
(43) Date of publication of application: **09.11.2005**
(21) Application number: 04300266.6
(22) Date of filing: 07.05.2004
(51) Int. Cl.: G06F 9/46, G06F 9/44

(54) **Web application for supporting transaction processing**

(71) Applicant: Hewlett-Packard Development Company, L.P., Houston, TX 77070 (US)
(72) Inventor: Manfredi, Raphael, 38053 Grenoble (FR); Fouche, Pierre, 38053 Grenoble (FR)
(74) Representative: Lloyd, Richard Graham

(57) **Abstract**

A web application is described of a type capable of assuming a plurality of nested states and being arranged to process a received event from among a predeterminable set of events to change from one state to another, the web application comprising a state machine in which one or more states correspond to transaction units of work.

## Description

### BACKGROUND OF THE INVENTION

The present invention relates to web applications for supporting transaction processing.

The Internet has now become the primary global digital information distribution service. The World Wide Web (Web) allows users to navigate Internet resources in an exploratory way, without using internet protocol (IP) addresses or other special technical knowledge. The Web is made up of interconnected web pages, or web documents stored on web servers. These pages are accessed with the use of a web browser. Web browsers use URL addresses to access resources on the Internet.

The Web uses a transfer protocol known as Hypertext Transfer Protocol (HTTP). HTML and other types of web pages are made up of content text as well as formatting codes that indicate how the page should be displayed. A web browser interprets these codes in order to display the page.

The HTML, or other, code that makes up each web page may be dynamically generated by an event-driven program that is running on the server hardware. This type of program is known as a web application. In the following, the terms "web server" will be used to refer to the logical entity that provides a web page in response to an http request and "web application" to the set of components that provide this function using general-purpose computing platforms within general-purpose operating environments such as are provided by the Microsoft Windows, Linux or HP-UX operating systems and their related programming libraries and tools.

Web applications are generally event-driven programs which react to HTTP requests from the client, the http request being direct ed to a web address (a URL). The web application will generate and return a web page to the browser. The difference between this type of arrangement and a simple "static" site is that each action the user takes can have some semantics associated with it. In other words, the resulting web page can differ according to the user, the current time or other factors prevailing in the system.

Thus, when the web application receives an event, it is arranged to evaluate the received event and decide how to respond to the client. This evaluation process may involve interaction with business logic of some kind. The interaction with the business logic can take place independently of the screen design or user interface and often involve s transactions with back-end systems, such as remote databases. In web applications, the server side code that is responsible for the user interface (ie generation of the web pages to be served) is sometimes referred to as the presentation layer. For instance, in order to generate a web page, the presentation layer may need to access or update business data held in a database. Retrieved data can then be used by the presentation layer to build an appropriate HTML table for rendering and display by the browser.

Thus, a web application can naturally be separated into a presentation layer, a business and a data layer. This separation is often referred to in web application server literature as the 3-tier model. Physically, the 3 tiers can be implemented separately and on different servers, a feature that can lead to greater scalability and an ability to process more client requests simultaneously.

One well-established architecture for user interfaces which facilitates event driven systems such as this is known as the Model-View-Controller or MVC architecture. The role of the controller in the MVC architecture is to determine the control flow of the system. It must process an incoming event from the user interface and determine the next state of the user interface. In addition, the controller generally must use the model component to carry out any actions required. This can change the state of the underlying business system. With this approach, the state of the underlying business system and the state of the user interface are two different, though often related, things. Thus, the presentation layer of a typical web application can be seen to comprise the view and controller elements. The model element, on the other hand, is separate from the presentation layer views and controllers. It is there to provide services to the presentation layer including access to persistent storage and thus represents the business logic and data layers.

A further construct relevant, particularly to the business logic within web applications, is that of a transaction. A transaction is a sequence of coordinated operations on system resources such that either all of the changes take effect or none of them does. The coordinated operations are typically changes made to data held in storage, such as databases, data tables, files, data records and so on. Thus, in e-commerce and other situations, it can be seen that transaction are best supported by the business logic of the web application.

A transaction unit of work is one in which the well-known four fundamental transactional properties are satisfied: atomicity, consistency, isolation, and durability. Atomicity means that that the activities within the unit of work must be considered indivisible. A transaction that is consistent changes the data so as to ensure that the data remains in a consistent state―that data integrity rules are not violated, regardless of whether the transaction succeeded or failed. The data in the store may not be consistent during the duration of the transaction, but the inconsistency is invisible to other transactions, and consistency must be restored when the transaction completes. The isolation property of transactions dictates how concurrent transactions that act on the same subset of data behave. That is, the isolation property determines the degree to which effects of multiple transactions, acting on the same subset of application state, are isolated from each other. The durability property of transactions refers to the fact that the effect of a transaction must endure beyond the life of a transaction and application. That is, state changes made within a transactional boundary must be persisted onto permanent storage media, such as disks, databases, or file systems.

In order to provide these properties, a transaction processing system typically needs to support a defined transaction start point, a commit process and a rollback process for each unit of work. The commit process makes the state changes permanent and the rollback process returns the system to the state it was before the transaction started at the start point. If a web application is used as a front-end for transaction processing, the web application needs to be arranged to trigger these processes at appropriate times in response to http events coming from a browser.

### SUMMARY OF THE INVENTION

In brief, this invention provides a web server including a web application of a type capable of assuming a plurality of nested states and being arranged to process a received event from among a predeterminable set of events to change from one state to another, the web application comprising a state machine in which one or more states correspond to transaction units of work.

The invention finds particular, but not exclusive, application for implementing a web server in which the presentation layer is implemented by separate view and controller elements following the classical model-view controller (MVC) model and where the controller element comprises a state machine that formally describes the set of states for the application, and becomes the main support for controlling the operations that can happen. In this case, the dynamic generation of a web page by the view element is triggered on entry to at least some of the states. Model objects, such as pagebeans, for carrying out all or parts of the transaction can the be associated with the states and can provide information for the web pages involved in the transaction.

It is known to use a state machine to handle transactions within a web application. For instance, an article made available at http://www.uidesign.net/1999/papers/webmvc_part1.html describes how a deterministic presentation layer can be achieved by modeling the User Interface using statecharts and then implementing the statechart design as part of a Model-View-Controller (MVC) engine that includes a State machine. In that proposal, a separate unit of work class is defined in order to describe transactions.

However, the present invention enables the state machine paradigm and its supporting features to be use d to implement transactions without using a separate class or other abstraction to represent the transaction boundary. The state machine with its nested states becomes the natural expression of the transaction boundaries. If a transaction spans several states, simply adding to the state machine a super state around the states will serve to implement a 'transaction boundary'.

Preferably, the application provides for the creation of context objects containing data relating to each state based on a defined context object class, the context object class providing for an entry method for execution upon entry of the state, and an exit method for execution upon exit of the state. In these embodiments a state machine controller is arranged to process a state transition by calling, in a defined sequence, the exit methods of states left by virtue of the transition and the enter methods of states entered by virtue of the transition.

Using these facilities, the natural callback flow from the state machine controller can be used to monitor the transaction and detect when a rollback is needed or whether the transaction has been committed.

Thus, the exit method of at least one context object class can be configured to carry out a transaction rollback. This provides a convenient way of ensuring that, under any circumstances, a transaction is properly rolled back unless an explicit commit action is carried out.

In particularly preferred such embodiments, actions may be associated with state transitions and the state machine controller class is arranged to process a transition by carrying out the action before calling any of the enter and/or exit methods. In this way, a commit action can be explicitly carried out before any rollback that may be automatically invoked by any exit methods called by the state machine controller.

In addition or in other embodiments, transaction rollback can be provided for as a conditional action associated with transitions out of the state associated with the transaction.

In another aspect the invention provides a method for developing a web application comprising: creating a state machine to describe the plurality of states and a set of transitions between said states; designating at least one state to represent a transaction boundary; configuring a process triggered by an event received by the state machine to call a rollback routine for the transaction.

As described above the method can comprise defining a state context object for the state representing the transaction boundary and configuring an exit methods for the state context object to call a rollback routine for the transaction. Alternatively or additionally, the method can comprise identifying all possible transitions out of the state representing the transaction boundary; and configuring actions associated with the identified possible transitions to call a rollback routine for the transaction if they transition results in the state machine transitioning from a state which is a substate of the state representing the transaction boundary to an state which is not a substate of the state representing the transaction boundary.

Yet another aspect of the invention provides a method for operating a web application comprising: receiving an event in a state machine controller; determining a state change from a current state and said received event; determining whether said state change causes a superstate to be exited and if so calling a rollback routine for a transaction.

As described above, the rollback routine can be called by a exit routine associated with the superstate and the determination as to whether said state change causes the superstate to be exited is carried out by calling an exit routine associated with each state boundary crossed by the state change.

Alternatively or additionally, the determination as to whether said state change causes a superstate to be exited is carried out by assessing whether the current state is a substate of the superstate and by assessing whether a target state is a substate of the superstate.

### BRIEF DESCRIPTION OF THE DRAWINGS

Embodiments of the invention will now be described by way of example only, with reference to the following figures, wherein:
Fig 1 is a schematic diagram showing a web application in the prior art;
Fig 2 is a schematic diagram showing a web application in an embodiment of the invention;
Fig 3 is a flow chart showing a process carried out upon a state transition;
Fig 4 is a state diagram showing the screen flow of a simple web application that supports a transaction.

### DETAILED DESCRIPTION OF THE PREFERRED EMBODIMENT

In the embodiments to be described below, the JavaServer Pages (JSP) technology is employed as a means to dynamically generate web pages, although it will be appreciated that any other suitable dynamic Web scripting/programming arrangement may equally be used. The JSP technology uses XML-like tags to encapsulate the logic that generates the content for a web page. The application logic can reside in server-based resources (such as JavaBeans) that the page accesses via these tags.

As will be understood by those skilled in the art, object-oriented programming techniques involve the definition, creation, use and destruction of objects. These objects are software entities comprising data elements and routines, or methods, which manipulate the data elements. The data and related methods are treated by the software as an entity and can be created, used and deleted as if they were a single item. Together, the data and methods enable objects to model entities in terms of their characteristics, which can be represented by the data elements, and its behavior, which can be represented by its methods. In this way, objects can model things like web pages, events, people or computers.

Objects are defined by creating "classes" which are not objects themselves, but which act as templates that instruct the compiler how to construct instances of the actual object. A class may, for example, specify the number and type of data variables and the steps involved in the methods which manipulate the data. An object is instantiated in the program by means of a special method called a constructor which uses the corresponding class definition and additional information, such as arguments provided during object instantiation, to construct the object. The Java runtime environment deletes objects when it determines that they are no longer being used. This process is called garbage collection. Objects may be used by using their data and invoking their methods.

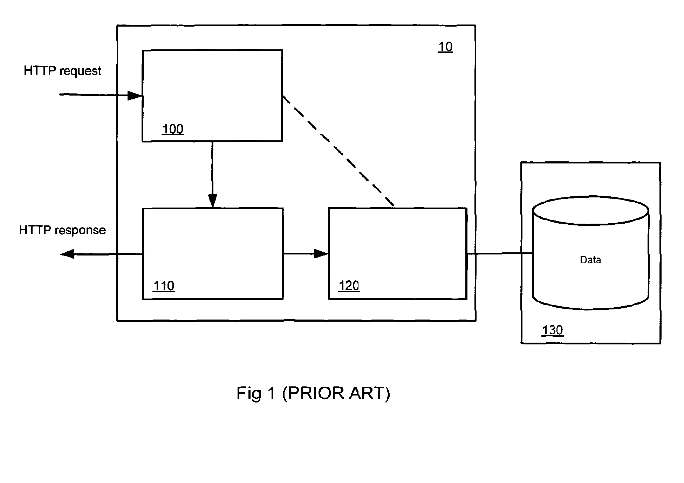

Figure 1 shows a known type of architecture for a web application that forms part of a web server illustrated generally at 10. The architecture shown in Figure 1 comprises a servlet 100, one or more JSP pages 110 and one or more Javabeans 120 that may be used for accessing external data resources illustrated at 130. This general configuration is known as the JSP model 2 architecture and is an example of an MVC (model-view-controller) architecture.

As is well known, servlets are server-side software modules that fit into a web server framework and can be used to extend its capabilities. A JavaBean is simply a building block component that can be combined with other components in the same or other computers in a distributed network to form an application. Such components can be deployed on different servers in a network and communicate with each other for needed services.

Servlet 100 acts as the controller and is in charge of processing an incoming HTTP request by deciding, depending on the user's actions, which of JSP pages 110 to forward the request to, as well as instantiating any beans or objects 120 used by these JSP pages. In such architectures, there is not normally any processing logic within the JSP pages themselves; they are simply static templates that are arranged to be populated by retrieving any objects or beans that may have been previously created by servlet 100, and extracting the dynamic content from them. The general operation of such a system will be generally well understood by those skilled in the art.

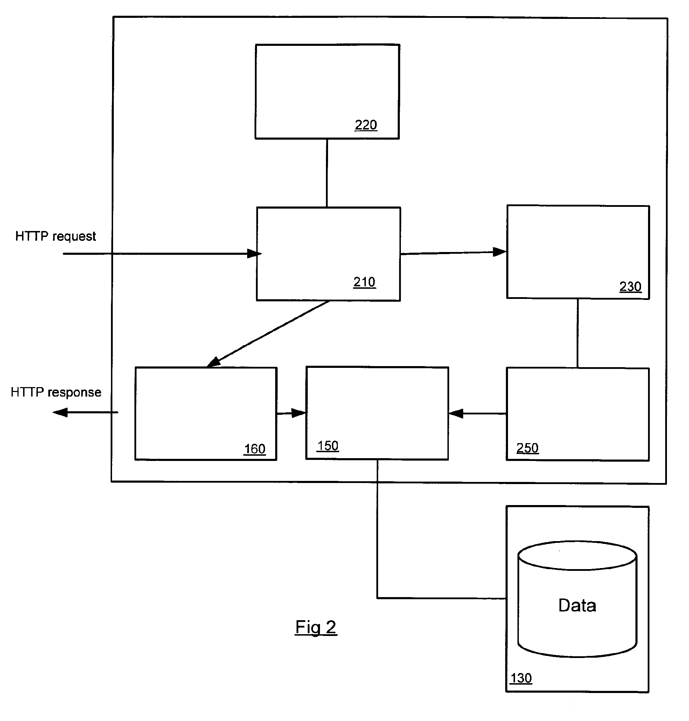

Fig 2 illustrates a web application architecture of the same general type as that illustrated in Fig 1 but in which the controller component is provided with a state machine. The operation of such a web application is as follows. First an incoming http request is received by a SmvController servlet 210 which manages application flow and logic in a manner to be described in more detail below. Event-Type mapper 220 translates the HTTP messages sent to the application server into event objects that are meaningful for the application. Then, the events are passed to a State Machine Controller 230 which consumes the event according to a state machine definition 250. A session manager and session controller (not shown) are also present to manage user authorization in generally known manner (although such components would also normally be present in the system illustrated in Fig 1).

State machine definition 250 defines the flow and logic of the web application. States represent views and transitions between states represent actions. Web application developers define the states and transitions which handle request parameters, use business objects to handle business logic, and populate page beans given to the bean manager 150 to display information on pages.

The state machine used in this embodiment can contain nested states. In the State Machine Definition 250 each atomic state, ie a state that does not itself have sub-states, represents a screen that the user will see, with transitions among the various states representing the navigation flow between the screens. Superstates are used to encapsulate and provide transitions that are common to all of their substates and to provide transaction boundaries as described below.

When the State Machine Controller 230 receives an event, it computes the next application state based on the combination of several factors: the current state, the event received, the environment context and the set of configured transitions from the current state. Actions can be attached to the state transition that will take place, to carry out the desired business logic.

After event handling and a new application state has been determined, display of the page associated with that new state is triggered. The SmvController servlet 210 forwards control to JSP view generator 160 to generate an HTML web page that will be sent to the client browser. JSP view generator 160 typically makes use of Javaserver pages Standard Tag Library (JSTL) to help produce the HTML. These tag libraries in turn use information stored in the page beans.

Once the page is generated, provided to the browser and displayed, it presents options to the user for another interaction, and the cycle repeats itself.

Thus, the hierarchical state machine definition 250 formally describes the set of states that the application can be in, and becomes the main support for controlling the operations that can happen.

Each atomic state, ie each state that does not have substates, represents a view that the application will show (a web page) and, the state machine is designed so that one or more of the superstates correspond to transaction units of work.

In a preferred first set of embodiments, each state of the state machine is associated with a context object, and is equipped with callbacks, triggered by the state machine controller when a state is entered or left.

The state context object attached to a particular state is created once, the first time the state is entered, and then remains in existence throughout the session: this allows the data pertaining to the state to be stored there.

An object context class *BaseStateContext* is thus provided that has the methods shown in Table I.

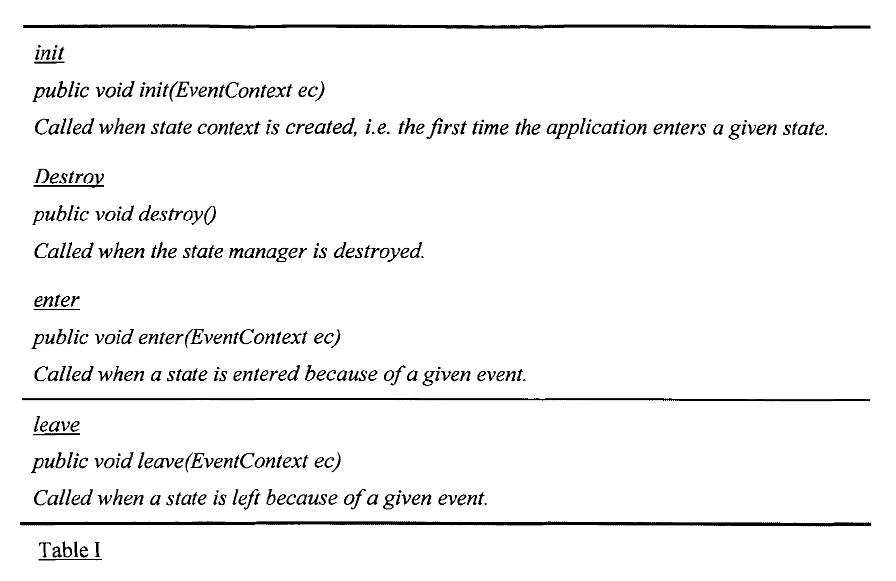

When a transition is made from one state to another state, several nested states may be left and then several nested states entered. As each state boundary is crossed, the corresponding callbacks "Leave" and "Enter" shown in Table I and that are provided by the *BaseStateContext* class are called by the state machine controller on the associated state objects in the order described, which is defined by the actual state boundaries that are crossed during the transition.

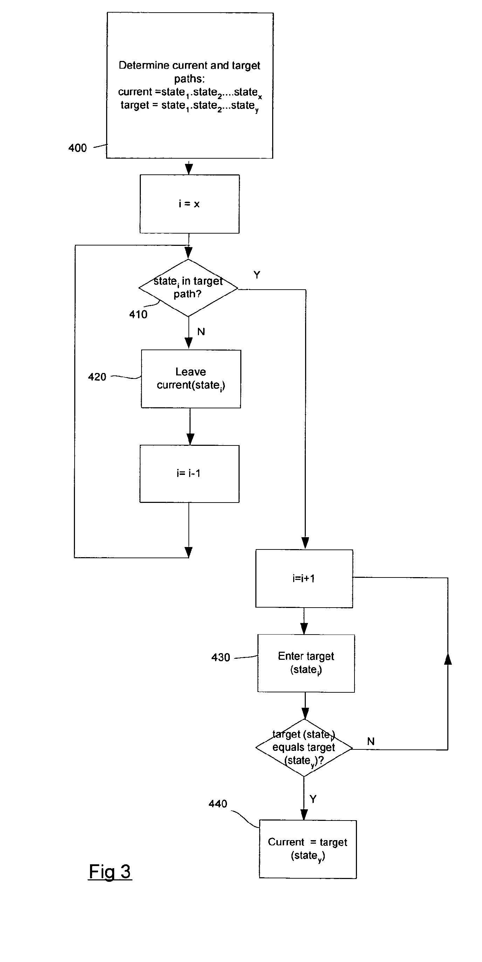

An example of an algorithm that may be used by the state machine controller is shown in Fig 3. Consider a transition from statex to statey. First the full path of statex and statey are calculated. This results in lists of all states from the root state to statex and statey respectively. It is then determined in step 410 whether the current state lies in the path of the target state in step 410, if not then the leave method is carried out on the current state in step 420. This process is repeated until a state is reached that does lie in the path of the target state. The enter methods of states in the target path are then repeatedly called until the target statey is reached. The target state statey is then set as the current state.

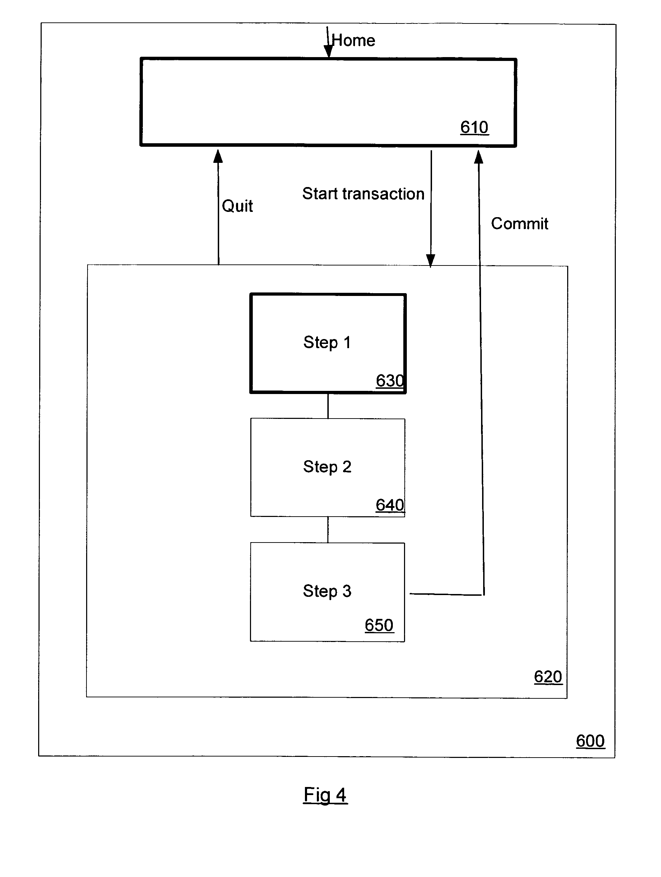

An example of the use of the enter and exit callbacks to support transaction handling is illustrated with reference to Figure 4. In the state machine illustrated in Fig 4, a superstate 600 includes a home state 610 and a transaction superstate 620. Within each superstate, one substate illustrated in bold is selected as the default substate that is entered by default on entry to the superstate. This default substrate can be either configured to always be the same state, or can be dynamically computed on entry to the superstate. For example, on entry to the site, the home state 610 is selected as the default state within super state 600. Thus on first entry to the site, it is the web page associated with home state 610 that is generated and displayed.

Transaction superstate 620 includes states 630, 640 and 650 representing 3 web pages displayed as steps in the establishment of a transaction. It will be understood that transitions that are illustrated as being available from a superstate are available from each of the substates within the superstate. So, for instance the "Home" event is available from each of the three atomic substates 610, 630, 640 and 650.

There are a number of ways in which a transition out of states 630, 640 or 650 may occur. A specific quit transition is available from each of the states, but a home transition is also available, since substates 630, 640 and 650 are all substates of super state 600 to which the home transition is attached. The leave callback associated with transaction superstate 620 is therefore a convenient way of ensuring that a transaction rollback action is carried out whenever and however the transaction superstate 620 is left. The commit transition which is available from state 650 step 3 of the transaction also causes state 620 to be left and therefore the rollback to be carried out, however if the commit action is associated with the commit transition then this action will be carried out before the leave callback is called.

As an alternative to using the callbacks in the manner described above, the commit action may be added explicitly to the "home" and "quit" transitions to test whether they will result in a transition from within state 620 to outside it, in which case the rollback method associated with the transaction should be called.

It is assumed that methods are available that enable to determine whether one state is a substate of another. In this case a conditional statement of the type:
- *If (state_620 hassubstate(current_state) AND state620 hasnotsubstate(target_state)) then rollback (state_620)*
may be associated with the home and quit transitions for instance, which are each available from each of states 630, 640 and 650.

It will be appreciated that commercialised forms of the present embodiment would in practice take the form of a set of computer programs adapted to run on general-purpose computing platforms within general-purpose operating environments such as are provided by the Microsoft Windows, Linux or HP-UX operating systems and their related programming libraries and tools. These programs may be marketed in the form of suitably coded computer program products including program code elements that implement the functionality described. It will be appreciated though that the techniques described may equally be implemented as special purpose hardware or any combination of software, hardware and/or firmware.

The above discussion is meant to be illustrative of the principles and various embodiments of the present invention. Numerous variations and modifications in each of the illustrated examples will become apparent to those skilled in the art once the above disclosure is fully appreciated. It is intended that the following claims be interpreted to embrace all such variations and modifications.

## Claims

1. A web server including a web application of a type capable of assuming a plurality of nested states and being arranged to process a received event from among a predeterminable set of events to change from one state to another, the web application comprising a state machine in which one or more states correspond to transaction units of work.

2. A web server as claimed in claim 1 wherein the application provides for the creation of context objects containing data relating to each state based on a defined context object class, the context object class providing for an entry method for execution upon entry of the state, and an exit method for execution upon exit of the state, and the web application comprises a state machine controller arranged to process a state transition by calling, in a defined sequence, the exit methods of states left by virtue of the transition and the enter methods of states entered by virtue of the transition.

3. A webserver as claimed in claim 2 wherein the exit method of at least one context object class is be configured to carry out a transaction rollback.

4. A web server as claimed in claim 2 or claim 3 wherein actions may be associated with state transitions and the state machine controller class is arranged to process a transition by carrying out the action before calling any of the enter and/or exit methods.

5. A web server as claimed in any preceding claim wherein transaction rollback is provided for as a conditional action associated with transitions out of the state associated with the transaction.

6. A web server as claimed in any preceding claim wherein at least one state corresponding to a transaction unit of work is a superstate.

7. A method for developing a web application comprising:
creating a state machine to describe the plurality of states and a set of transitions between said states;
designating at least one state to represent a transaction boundary;
configuring a process triggered by an event received by the state machine to call a rollback routine for the transaction.

8. A method as claimed in claim 7 comprising:
defining a state context object for the state representing the transaction boundary;
configuring an exit methods for the state context object to call a rollback routine for the transaction.

9. A method as claimed in claim 7 comprising:
identifying all possible transitions out of the state representing the transaction boundary;
configuring actions associated with the identified possible transitions to call a rollback routine for the transaction if they transition results in the state machine transitioning from a state which is a substate of the state representing the transaction boundary to an state which is not a substate of the state representing the transaction boundary.

10. A method for operating a web application comprising:
receiving an event in a state machine controller;
determining a state change from a current state and said received event;
determining whether said state change causes a superstate to be exited and if so calling a rollback routine for a transaction.

11. A method as claimed in claim 11 wherein the rollback routine is called by a exit routine associated with the superstate and the determination as to whether said state change causes the superstate to be exited is carried out by calling an exit routine associated with each state boundary crossed by the state change.

12. A method as claimed in claim 10 or claim 11 wherein the determination as to whether said state change causes a superstate to be exited is carried out by assessing whether the current state is a substate of the superstate and by assessing whether a target state is a substate of the superstate.
